# EUROPEAN PATENT APPLICATION

(11) **EP 4 837 827 A1**
(43) Date of publication of application: **11.11.2026**
(21) Application number: 26177038.2
(22) Date of filing: 06.05.2026
(51) Int. Cl.: B62K 21/04, B62K 21/02

(54) **ADJUSTABLE FASTENING ASSEMBLY AND TWO-WHEELED VEHICLE FORK**

(30) Priority: 07.05.2025 TW 114117183
(71) Applicant: Vanda Electronics Co., Ltd, New Taipei City 22061 (TW)
(72) Inventor: Tucker, Kareem Azizi, 10567 Taipei (TW)
(74) Representative: Cabinet Chaillot

(57) **Abstract**

An adjustable fastening assembly (10) comprising a base (11) having a coupling section (111) defined in the base (11), with an inner diameter formed by the coupling section (111) being tapered along a longitudinal direction (X), and a tubular fixing element (12) movably mounted within the coupling section (111) with a slit (121) extending along the longitudinal direction (X) and traversing at least a part of a circumferential wall (122) of the fixing element (12), wherein the fixing element (12) changes a gap size formed by the slit (121) in accordance with its depth position in the coupling section (111).

## Description

### Field of the Invention:

A fastening structure, particularly an adjustable fastening assembly and its two-wheeled vehicle fork.

### Background of the Invention:

In order for a two-wheeled vehicle to adapt to rough and bumpy roads as well as sloping terrain, the front fork of a two-wheeled vehicle is usually combined with a shock absorber. In addition to the inherent shock absorbing performance, the length adjustment of the front fork is also extremely important. Depending on the rider's height or riding requirements, the length of the front fork will simultaneously affect the rider's lean angle and the rider's riding experience.

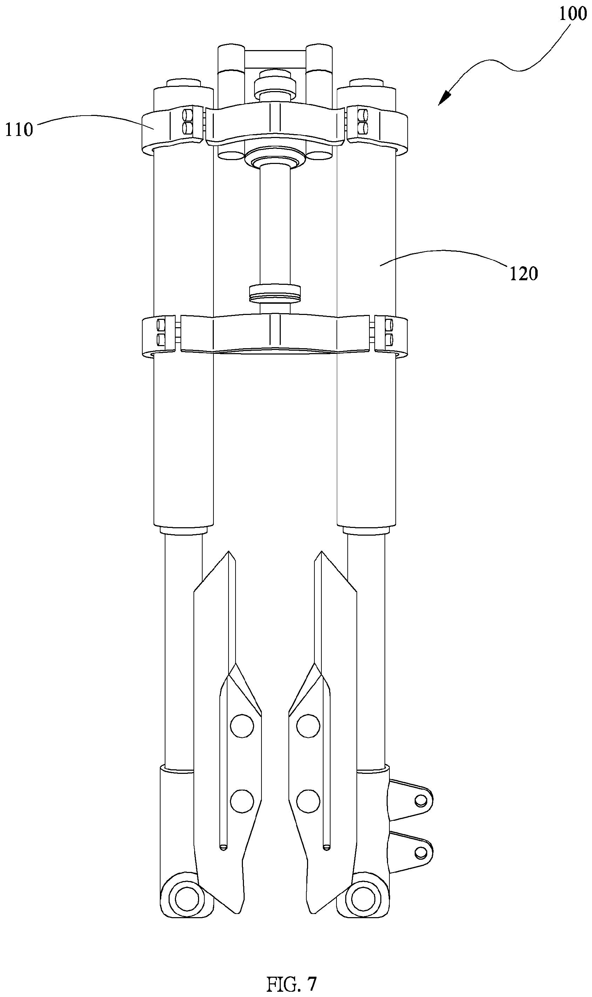

In a conventional two-wheeled vehicle front fork 100 (as shown in Figure 7), the front fork 100 typically includes at least one fork base 110. Two fork tubes 120 are clamped to each side of the fork base 110. The two sides of the fork base 110 are typically hollow tubular structures having a notch that allows the two fork tubes 120 to be inserted into the each side of the fork base 110, respectively. Finally, screws 112 are used to lock the notch close to each other to ensure that the hollow tubular structure clamps the fork inner tubes 120. However, due to the existence of the notch, the hollow tubular structure can easily cause uneven force distribution on the two-wheeled vehicle front fork when subjected to an impact from the ground, and can also easily cause axial displacement of the fork inner tubes 120 relative to the hollow tubular structure. If the front fork 100 uses two fork bases 110 distributed above and below to clamp the two fork tubes 120 to enhance clamping stability, not only is the overall structure complicated, but the lightweight design of the two-wheeled vehicle is also limited. In addition, the fork tubes 120 are easily deformed due to inconsistent clamping forces of the two fork bases 110 clamping the fork tubes 120 above and below. Therefore, the development of a front fork structure capable of adjusting the overall length of the front fork while achieving a lightweight design has become an urgent goal in the relevant field.

### Summary of the Invention:

In order to develop a front fork structure capable of adjusting the overall length of the front fork while achieving a lightweight design, the present invention provides an adjustable fastening assembly, comprising: a base having a coupling section extending along a longitudinal direction in the base; a tubular fixing element, wherein an outer diameter formed by the fixing element is tapered along the longitudinal direction and is movably mounted within the coupling section; and a tube inserted into the inner hollow portion of the fixing element, wherein a force-bearing direction of the tube is aligned with the longitudinal direction during use of the adjustable fastening assembly.

The present invention also provides an adjustable fastening assembly comprising a base; a coupling section, which is a through hole or groove extending along a longitudinal direction, defined in the base and forming an inner wall, wherein an inner diameter of the coupling section formed by the inner wall is tapered along the longitudinal direction; and a tubular fixing element which can be movably mounted within the coupling section, with a slit extending along the longitudinal direction and traversing at least a part of a circumferential wall of the fixing element, wherein an outer diameter of the fixing element corresponds to the inner diameter of the coupling section and is tapered along the longitudinal direction, and when the fixing element is placed in the coupling section, an outer circumferential surface of the fixing element abuts against the inner wall of the through hole, and the fixing element changes a gap size formed by the slit in accordance with its depth position in the coupling section.

Preferably, the inner diameter formed by the fixing element remains consistent along the longitudinal direction.

Preferably, two coupling sections are defined on each side of the base.

Preferably, a cross-section of the through hole or groove of the coupling section is circular with a bevel angle.

Preferably, each fixing element has a fixing region at the larger outer diameter end extending radially outwardly from the outer surface, and the fixing region is aligned with one side of the base.

Preferably, at least one screw penetrates the fixing region and is screwed into one side of the base.

Furthermore, the present invention provides a two-wheeled vehicle fork comprising the adjustable fastening assembly described above, wherein when the two-wheeled vehicle fork is subjected to an impact force from the ground, the impact force is aligned with the longitudinal direction.

Furthermore, the present invention also provides another preferred embodiment of the two-wheeled vehicle fork, wherein two coupling sections and two fixing elements are defined on each side of the base, and two fork tubes respectively extend outwardly from the other ends of the two fixing elements opposite to the base.

Furthermore, the present invention also provides another preferred embodiment of the two-wheeled vehicle fork, wherein one coupling section and one fixing element are defined in the middle of the base, and an upper tube extends outwardly from the other end of the fixing element opposite to the base.

The adjustable fastening assembly provided by the present invention has a simple structure that is easy to manufacture and can significantly reduce the volume and weight of the front fork compared to the existing technology, thereby achieving a lightweight effect. In addition, the adjustable fastening assembly can adapt to different tube diameters and adjust the overall length of the front fork as required.

### Drawings:

Figure 1 is a perspective structural schematic view of a preferred embodiment of the present invention.
Figure 2 is an exploded view of the preferred embodiment of the present invention.
Figure 3 is a cross-sectional schematic view in a first direction of the preferred embodiment of the present invention.
Figure 4 is a cross-sectional schematic view in a second direction of the preferred embodiment of the present invention.
Figure 5 is an exploded view of a second preferred embodiment of the present invention.
Figure 6 is a schematic view of a third preferred embodiment of the present invention.
Figure 7 is a perspective structural schematic view of the prior art provided by the present invention.

### Reference Numerals:

10: Adjustable fastening assembly
11: Base
111: Coupling section
112: Inner wall
113: Upper side
114: Lower side
12: Fixing element
121: Slit
122: Circumferential wall
13: Fixing region
14: Upper tube
15: Fork tube
X: Longitudinal direction
100: Front fork
110: Fork base
120: Fork inner tube
130: Fork outer tube
1301: Fork outer tube
1302: Connecting section

### Detailed Description of the Invention:

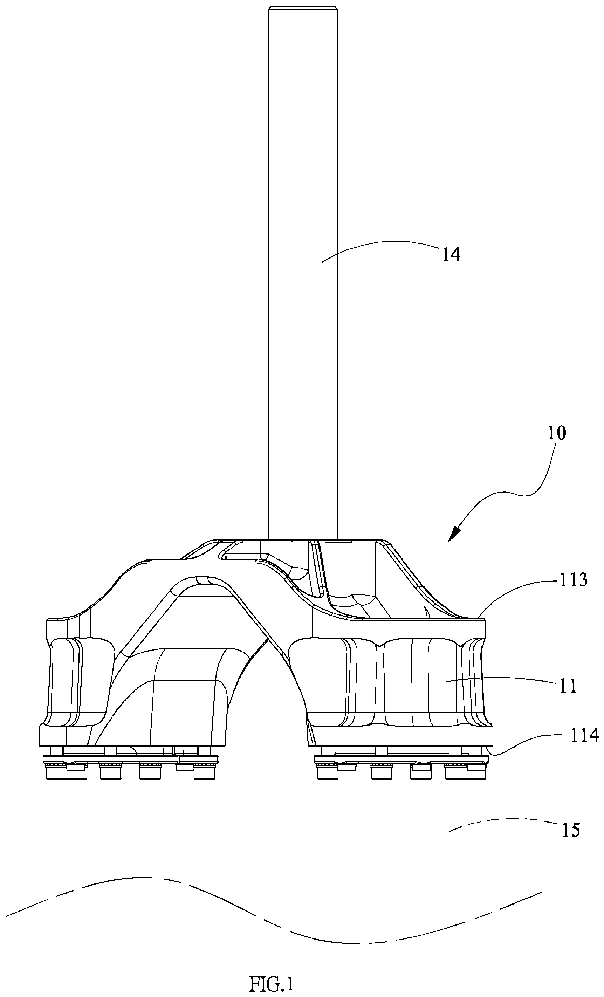

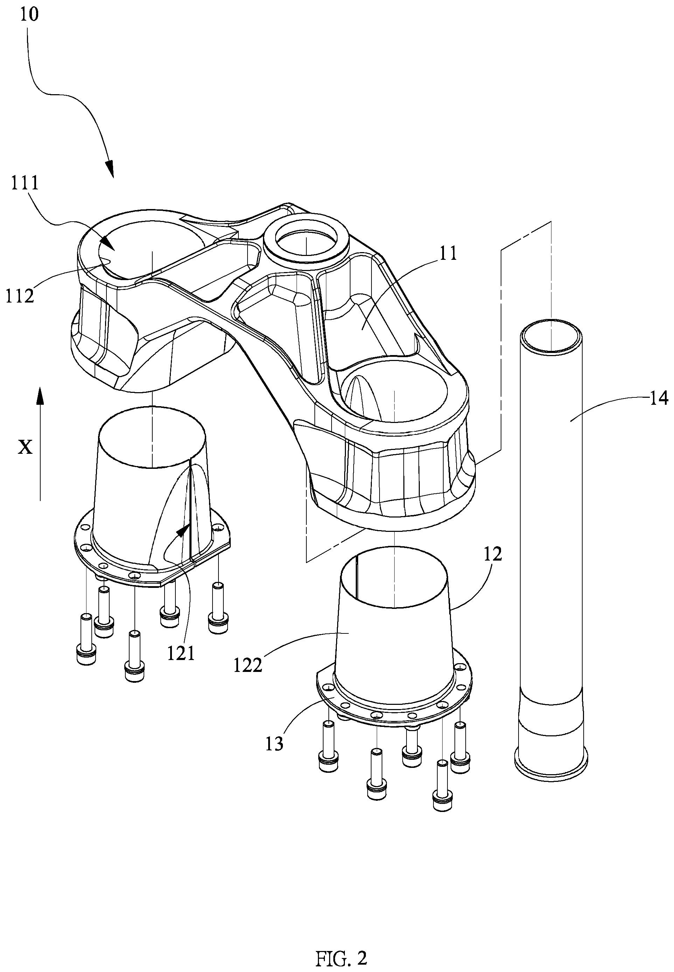

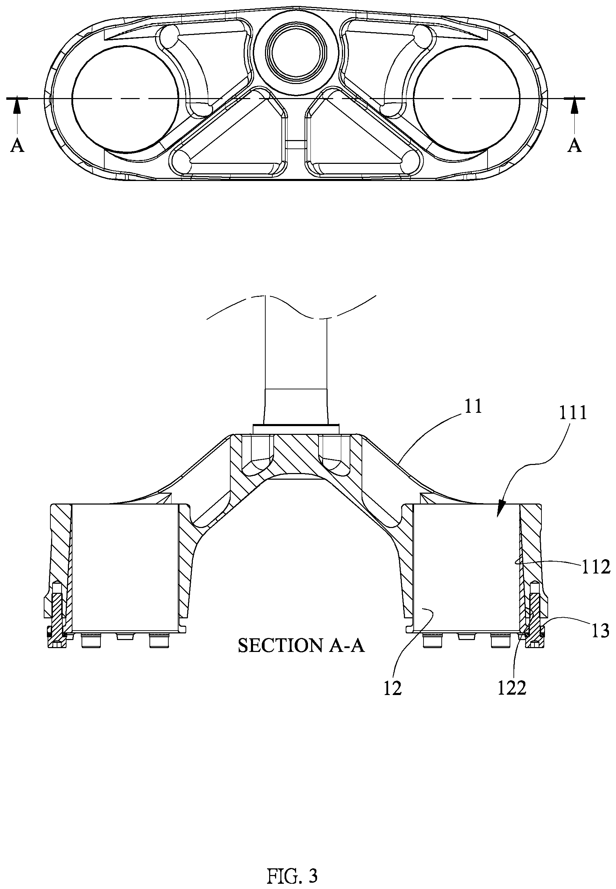

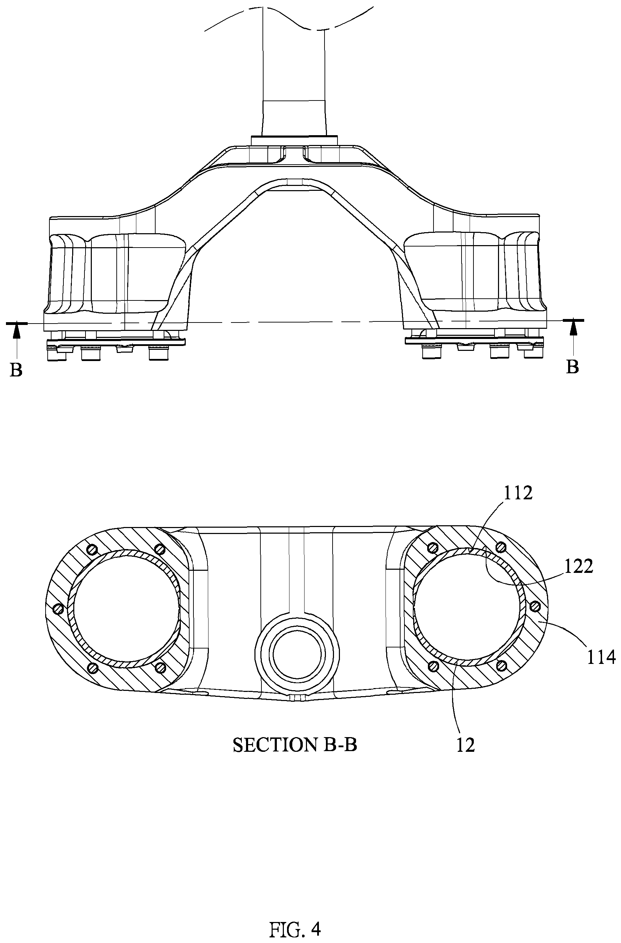

Reference is made to Figures 1 to 5, which illustrate the adjustable fastening assembly 10 provided by the present invention, comprising a base 11 and two fixing elements 12. Two coupling sections 111, which may be through holes or grooves, are defined on each side of the base 11. The coupling section 111 penetrates one of the two side surfaces of the base 11 along a longitudinal direction X, forming an inner wall 112 within the coupling section 111. An inner diameter formed by each inner wall 112 of the coupling section is tapered along the longitudinal direction X.

The two fixing elements 12 are tubular and movably mounted within the two coupling sections 111, respectively. A slit 121, generally oriented in the longitudinal direction X, traverses at least a part of a circumferential wall 122 of the fixing element 12. An outer diameter formed by each fixing element 12 corresponds to the inner diameter of the coupling section and is tapered along the longitudinal direction X. When each fixing element 12 is placed in each coupling section 111 along the longitudinal direction X, an outer circumferential surface of each fixing element 12 abuts against each inner wall 112, and the inner diameter formed by each fixing element 12 remains unchanged along the longitudinal direction X. Each fixing element 12 changes a gap size formed by the slit 121 in accordance with its depth position in each coupling section 111.

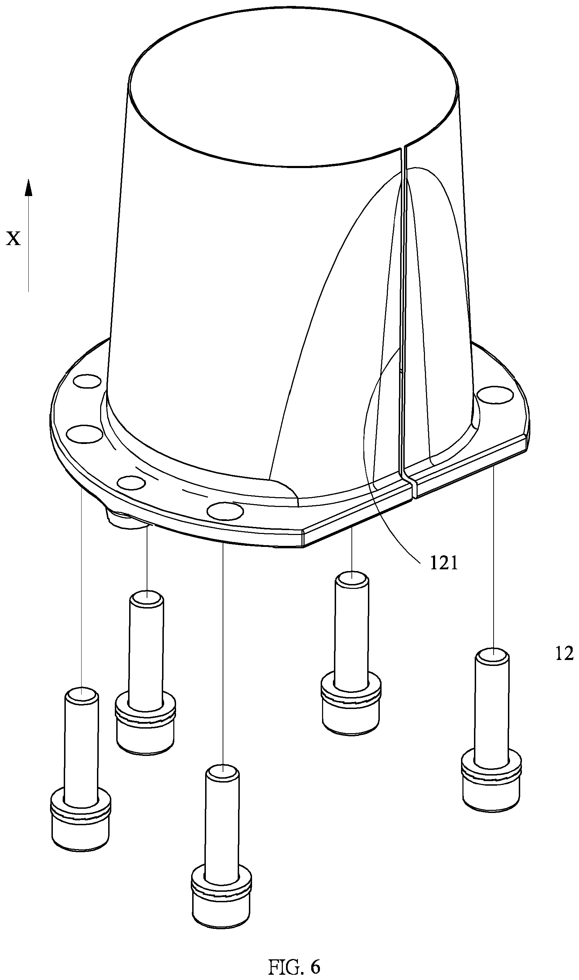

The slit 121, which is generally oriented toward and traverses at least a part of the circumferential wall 122 of the fixing element 12 along the longitudinal direction X, is not limited to being parallel to the longitudinal direction X. As shown in the embodiment provided in Figure 6, the slit 121 forms an angle with the longitudinal direction X but still traverses the circumferential wall 122 in the longitudinal direction X.

In another preferred embodiment, the slit 121 is zigzag along the longitudinal direction X and traverses the circumferential wall 122.

Each fixing element 12 has a fixing region 13 at the larger outer diameter end extending radially outwardly from the outer surface, and the fixing region 13 is aligned with one side of the base 11. At least one screw penetrates the fixing region 13 and is screwed into one side of the base 11.

The present invention also provides a two-wheeled vehicle fork suitable for the adjustable fastening assembly. The base 11 comprises an upper side 113 and a lower side 114. The two coupling sections 111 are defined on each side of the base 11 and penetrate the base 11 from the upper side 113 toward the lower side 114 direction. An upper tube 14 protrudes from the upper side 113 of the base 11, and the upper tube 14 is equidistant from the two coupling sections 111. The structural relationship between the two fixing elements and the base 11 has been described in the preceding paragraphs and will not be repeated here.

It should be noted that the base 11 completely surrounds the fixing element 12 without a notch design, thereby preventing the two-wheeled vehicle fork containing the adjustable fastening assembly 10 from experiencing uneven force distribution when subjected to an impact force from the ground. In addition, the design of the inner diameter of the coupling section of the base 11 being tapered along the longitudinal direction X can also prevent the fixing element 12 from being displaced relative to the coupling section 111 along the longitudinal direction X and from being separated from the coupling section 111.

In addition, since a force-bearing direction of the impact force received by the adjustable fastening assembly 10 during use is the same as the longitudinal direction X, when the two-wheeled vehicle fork is subjected to the impact force, it can simultaneously provide a pushing force to the fixing element 12 toward the coupling section 111, allowing the fixing element 12 to be more tightly engaged with the coupling section 111, thereby preventing the fixing element 12 from separating from the coupling section 111.

Furthermore, two fork tubes 15 are movably mounted within the two fixing elements 12, respectively, with one end of each fork tube 15 clamped by each fixing element 12 and the other end extending in the opposite direction of the base 11. By adjusting the size of the inner diameter formed by the fixing element 12, the two fork tubes 15 can be securely mounted within the fixing element 12. In this way, each fixing element 12 changes the gap size of the slit 121 in accordance with its depth position relative to each coupling section 111 to adapt to fork tubes 15 of different radii.

In another embodiment, the two fork tubes 15 each extend from one end of the two fixing elements 12 in the opposite direction of the base 11. The two fork tubes 15 are mounted integrally with the two fixing elements 12, respectively. In this way, the overall length of the two-wheeled vehicle fork, i.e., the length from the base 11 to the open end of each fork tube 15, can be adjusted by changing the depth position of the fixing element 12 relative to each coupling section 111.

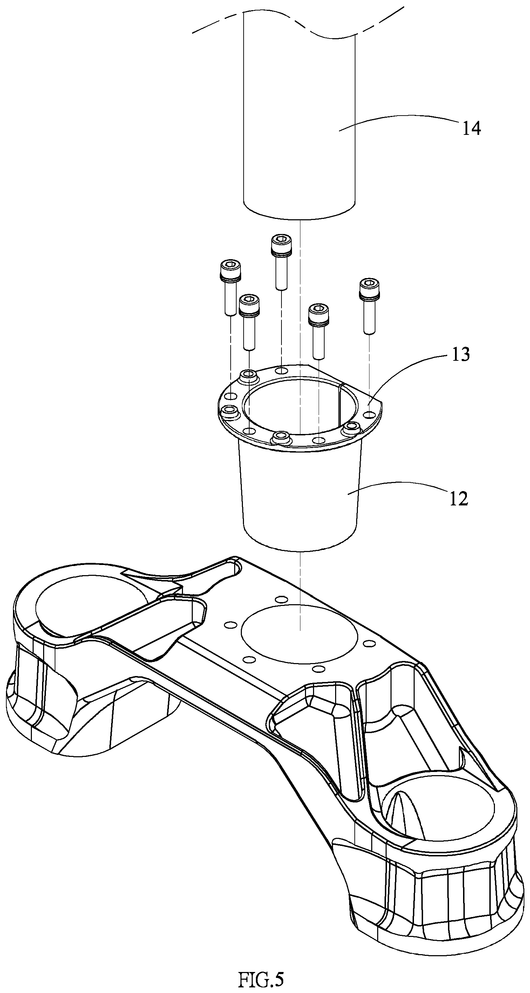

Reference is made to Figure 5. In one embodiment, the coupling relationship between the fixing element 12 and the coupling section 111 is not limited to use between the two fork tubes 15 and the base 11. In this embodiment, one coupling section 111 is defined on the upper side 113 in the middle of the base 11, and the fixing element 12 is coupled to the upper tube 14 at the end opposite to the base 11, wherein the upper tube 14 can be similarly mounted by inserting into the fixing element 12 or extending integrally from the other end of the fixing element 12.

Furthermore, the coupling section 111 includes a fixing structure for preventing the fixing element from rotating relative to the coupling section. The fixing structure is not limited and may be a concave-convex structure configurated between the coupling section 111 and the fixing element 12. In this embodiment, the cross-section of the through hole or groove of the coupling section 111 is circular with a bevel angle. In another embodiment, the cross-section of the through hole or groove of the coupling section 111 may also be a polygon.

Furthermore, the inner wall 112 of the coupling section 111 or the circumferential wall 122 surface of the fixing element 12 includes a rough surface to promote in the tight abutment between the coupling section 111 and the fixing element 12.

Similarly, the inner wall of the fixing element 12 or the outer surface of the fork tube 15 coupled to the fixing element 12 may also include a rough surface to promote in the coupling of the fixing element 12 and the fork tube 15.

The rough surface can be achieved by roughening methods such as laser or sandblasting.

The adjustable fastening assembly 10 provided by the present invention has a simple structure that is easy to manufacture. When applied to the two-wheeled vehicle fork, it can significantly reduce the volume and weight of the two-wheeled vehicle fork compared to the existing technology, thereby achieving a lightweight effect. In addition, the adjustable fastening assembly 10 can also adapt to different tube diameters and adjust the overall length of the two-wheeled vehicle fork as required.

The adjustable fastening structure for the two-wheeled vehicle fork provided by the present invention has a simple structure that is easy to manufacture and can significantly reduce the volume and weight of the two-wheeled vehicle fork compared to the existing technology, thereby achieving a lightweight effect. In addition, the adjustable fastening structure for the two-wheeled vehicle fork can also adapt to different tube diameters and adjust the overall length of the two-wheeled vehicle fork as required.

## Claims

1. An adjustable fastening assembly (10), comprising:
a base (11) having a coupling section (111) extending along a longitudinal direction (X) in the base (11);
a tubular fixing element (12), wherein an outer diameter formed by the fixing element (12) is tapered along the longitudinal direction (X) and is movably mounted within the coupling section (111); and
a tube inserted into the inner hollow portion of the fixing element (12), wherein a force-bearing direction of the tube is aligned with the longitudinal direction (X) during use of the adjustable fastening assembly (10).

2. The adjustable fastening assembly (10) according to claim 1, wherein the coupling section (111) forms an inner wall (112), and an inner diameter of the coupling section (111) formed by the inner wall (112) is tapered along the longitudinal direction (X).

3. An adjustable fastening assembly (10), comprising:
a base (11) having a coupling section (111) which is a through hole or groove extending along a longitudinal direction (X) in the base (11) and forming an inner wall (112), wherein an inner diameter of the coupling section (111) formed by the inner wall (112) is tapered along the longitudinal direction (X); and
a tubular fixing element (12) moveably mounted within the coupling section (111) along the longitudinal direction (X), with a slit (121) extending along the longitudinal direction (X) and traversing at least a part of a circumferential wall (122) of the fixing element (12), wherein an outer diameter of the fixing element (12) corresponds to the inner diameter of the coupling section (111) and is tapered along the longitudinal direction (X), and when the fixing element (12) is placed in the coupling section (111), an outer circumferential surface of the fixing element (12) abuts against the inner wall (112) of the through hole, and the fixing element (12) changes a gap size formed by the slit (121) in accordance with a depth position of the fixing element (12) in the coupling section (111).

4. The adjustable fastening assembly (10) according to claim 3, wherein the inner diameter formed by the fixing element (12) remains consistent along the longitudinal direction (X), and the adjustable fastening assembly (10) comprises two coupling sections (111) defined on each side of the base (11), wherein a cross-section of the through hole or groove of the coupling section (111) is circular with a bevel angle.

5. The adjustable fastening assembly (10) according to claim 4, wherein each fixing element (12) has a fixing region (13) at the larger outer diameter end extending radially outward from the outer surface, and the fixing region (13) is aligned with one side of the base (11), wherein at least one screw penetrates the fixing region (13) and is screwed into one side of the base (11).

6. The adjustable fastening assembly (10) according to claim 5, wherein the inner wall (112) of the coupling section (111) and/or the circumferential wall surface (122) of the fixing element (12) includes a rough surface, wherein the rough surface is roughened by laser or sandblasting method.

7. A two-wheeled vehicle fork (100), comprising:
a base (11) comprising an upper tube (14) protruding from an upper side (113) of the base (11), two fork tubes (15) extending outward from both sides of a lower side (114) of the base (11), the upper tube (14) and/or the two fork tubes (15) comprising an adjustable fastening assembly (10), the adjustable fastening assembly (10) comprising a coupling section (111) which is a through hole or groove extending along a longitudinal direction (X) in the base (110) and forming an inner wall (112), wherein an inner diameter of the coupling section (111) formed by the inner wall (112) is tapered along the longitudinal direction (X); and
a tubular fixing element (12) movably mounted within the coupling section (111) along the longitudinal direction (X), with a slit (121) extending along the longitudinal direction (X) and traversing at least a part of a circumferential wall (122) of the fixing element (12), wherein an outer diameter of the fixing element (12) corresponds to the inner diameter of the coupling section (111) and is tapered along the longitudinal direction (X), when the fixing element (12) is placed in the coupling section (111), an outer circumferential surface of the fixing element (12) abuts against the inner wall (112) of the through hole, and the fixing element (12) changes a gap size formed by the slit (121) in accordance with a depth position of the fixing element (12) in the coupling section (111), wherein a force bearing direction of the upper tube (14) and/or the fork tubes (15) is aligned with the longitudinal direction (X).

8. A two-wheeled vehicle fork (100), comprising:
a base (11) comprising an upper side (113) and a lower side (114), two coupling sections (111) which are through holes or grooves extending from the lower side (114) toward the upper side (113) in the base (11), and each coupling section (111) forming an inner wall (112), wherein an inner diameter of the coupling section (111) formed by the inner wall (112) is tapered along a direction toward the upper side (113);
an upper tube (14) protruding from the upper side (113) of the base (110), the upper tube (14) being equidistant from the two coupling sections (111);
two tubular fixing elements (12) each movably mounted within each coupling section (111) along the longitudinal direction (X), with a slit (121) extending along a direction from the lower side (114) toward the upper side (113) and traversing at least a part of a circumferential wall (122) of the fixing element (12), wherein an outer diameter of the fixing element (12) corresponds to the inner diameter of the coupling section (111) and is tapered along the direction toward the upper side (113), when each fixing element (12) is placed in each coupling section (111), an outer circumferential surface of each fixing element (12) abuts against the inner wall (112) of each through hole, and each fixing element (12) changes a gap size formed by each slit (121) in accordance with a depth position of the fixing element (12) in each coupling section (111); and
two fork tubes (15) extending outwardly from the other ends of the two fixing elements (12) opposite to the base (11), respectively.

9. The two-wheeled vehicle fork (100) according to claim 8, wherein one end of each of the two fork tubes (15) is inserted into and is clamped by each fixing element (12).

10. The two-wheeled vehicle fork (100) according to claim 8, wherein the two fork tubes (15) are integrally connected to the other ends of the fixing elements (12) opposite to the base (11).

11. The two-wheeled vehicle fork (100) according to any one of claims 8 to 10, wherein the inner wall (112) of the coupling section (111) and/or the circumferential wall surface (122) of each fixing element (12) includes a rough surface.

12. The two-wheeled vehicle fork (100) according to claim 11, wherein the rough surface is roughened by laser or sandblasting method.

13. The two-wheeled vehicle fork (100) according to claim 8, wherein an inner wall of the fixing element (12) and/or an outer surface of the fork tube (15) coupled with the fixing element (12) includes a rough surface.

14. The two-wheeled vehicle fork (100) according to claim 13, wherein the rough surface is roughened by laser or sandblasting method.

15. A two-wheeled vehicle fork (100), comprising:
a base (11) comprising an upper side (113) and a lower side (114), a coupling section (111) which is a through hole or groove extending from the upper side (113) toward the lower side (114) in the middle of the base (11) and forming an inner wall (112), wherein an inner diameter of the coupling section (111) formed by the inner wall (112) is tapered along a direction toward the lower side (114);
a tubular fixing element (12) movably mounted within the coupling section (111), with a slit (121) extending along a direction from the lower side (114) toward the upper side (113) and traversing at least a part of a circumferential wall (122) of the fixing element (12), wherein an outer diameter of the fixing element (12) corresponds to the inner diameter of the coupling section (111) and is tapered along the direction toward the lower side (114), when the fixing element (12) is placed in the coupling section (111), an outer circumferential surface of the fixing element (12) abuts against the inner wall (112) of the through hole, and the fixing element (12) changes a gap size formed by the slit (121) in accordance with a depth position of the fixing element (12) in the coupling section (111); and
an upper tube (14) extending outwardly from the other end of the fixing element (12) opposite to the base (11).
